# EUROPEAN PATENT APPLICATION

(11) **EP 4 336 379 A1**
(43) Date of publication of application: **13.03.2024**
(21) Application number: 23191508.3
(22) Date of filing: 15.08.2023
(51) Int. Cl.: G06F 16/41

(54) **TRACKING CONCEPTS WITHIN CONTENT IN CONTENT MANAGEMENT SYSTEMS AND ADAPTIVE LEARNING SYSTEMS**

(30) Priority: 08.09.2022 US 202217930643
(71) Applicant: Obrizum Group Ltd., Cambridge CB5 8DZ (GB)
(72) Inventor: AGLEY, Chibeza Chintu, Cambridge, CB5 8LL (GB); FINK, Juergen, Cambridge, CB1 3UA (GB); ACHOURI, Sarra, Cambridge, CB23 3UU (GB); HARIHARAN ANAND, Vishnu, Cambridge, CB2 9PH (GB); CHADWICK, Matthew Jonathan, Stroud, GL6 6BU (GB)
(74) Representative: Smith, Mark David

(57) **Abstract**

A method of identifying one or more concepts in a multimedia file includes separating text derived from the multimedia file into sub-portions, extracting features from the text of the sub-portions, and identifying concept clusters for the sub-portions based on the extracted features. The method further includes associating each of the sub-portions with the one or more concepts presented in the sub-portions of text based on the identified concept clusters and presenting, via a user interface, one or more portions of the multimedia file, where the portions of the multimedia file are generated based on the one or more concepts presented in each of the sub-portions of text of the multimedia file.

## Description

### CROSS-REFERENCE TO RELATED APPLICATIONS

The present application claims the benefit of priority to U.S. Patent Application No. 17/930,643, filed September 8, 2022 and entitled "TRACKING CONCEPTS WITHIN CONTENT IN CONTENT MANAGEMENT SYSTEMS AND ADAPTIVE LEARNING SYSTEMS," the disclosure of which is incorporated by reference in its entirety.

### TECHNICAL FIELD

The present disclosure relates generally to content management systems and examples of identifying subjects or content area within content items provided to content management systems.

### BACKGROUND

Multimedia files (e.g., text files, video and audio files, images, text combined with images, and the like) may be useful for conveying information, such as in the context of online learning, training, assessment, and the like. However, such multimedia files may include content that covers or addresses many different concepts, mapping, visualizing, labelling, or targeting a particular concept within such files may be difficult. For example, in the context of online learning, paragraphs, graphics, and other content relevant to a particular concept being taught may be manually identified in order to present relevant content to a user (e.g., a student or other user receiving online training). In other examples, a student, assessment candidate, or other user may be provided with the entirety of a multimedia file, such that the user is presented with information not relevant to the concepts being taught or tested, leading to inefficient use of time and difficulty learning the intended concepts.

### SUMMARY

An example method of identifying one or more concepts in a multimedia file is disclosed herein. The method includes separating text derived from the multimedia file into sub-portions and extracting features from the text of the sub-portions. The method further includes identifying concept clusters for the sub-portions based on the extracted features, where the concept clusters are each associated with two or more sub-portions and a concept of the concepts. The identified concept clusters are utilized to associate respective sub-portions with one or more concepts of the concepts presented in the sub-portions of text based on the identified concept clusters. The method further includes associating, for respective concept clusters, the one or more concepts with one or more keywords based on analysis of text of the two or more sub-portions associated with the respective concept cluster and presenting, via a user interface, one or more portions of the multimedia file and one or more concept labels associated with the one or more portions of the multimedia file. The one or more portions of the multimedia file are generated based on the one or more concepts presented in each of the sub-portions of text of the multimedia file and the one or more concept labels are generated based on the one or more keywords associated with the one or more concepts presented in each of the sub-portions of text. The method further includes receiving, via the user interface, an adjustment to a marker corresponding to a starting location or an ending location of a portion of the one or more portions of the multimedia file within the multimedia file and presenting, via the user interface, an updated portion of the multimedia file based on the received update to the marker of the portion of the multimedia file.

In some examples, the method further includes visualizing a conceptual composition of the multimedia file with respect to one or more of amounts of concepts and temporal location via the user interface and using text of one of the sub-portions for directed similarity analysis or categorization, where the directed similarity analysis or categorization is done using machine learning.

In some examples, extracting the features from the text of the sub-portions comprises providing the sub-portions of the text derived from the multimedia file to a transformer to create embeddings associated with respective sub-portions of the text derived from the multimedia file, where identifying the concept clusters includes positioning the embeddings in a high-dimensional semantic space and using a clustering algorithm in the high-dimensional semantic space.

In some examples, identifying the concept clusters further includes determining a number of the concept clusters by calculating a silhouette score for the embeddings in the high-dimensional semantic space.

In some examples, identifying the concept clusters includes using a latent Dirichlet allocation (LDA) model.

In some examples, presenting the one or more concepts presented in each of the sub-portions of text of the multimedia file includes presenting the one or more concepts and corresponding location markers of the multimedia file. The location markers may include one of timestamps, page numbers, and page coordinates.

In some examples, the multimedia file includes text and one or more of images and graphics.

In some examples, the multimedia file is one of a video or audio file.

An example method of identifying one or more concepts in a multimedia file is disclosed herein. The method includes separating text derived from the multimedia file into sub-portions, extracting features from the text of the sub-portions, and identifying concept clusters for the sub-portions based on the extracted features. The method further includes associating each of the sub-portions with the one or more concepts presented in the sub-portions of text based on the identified concept clusters and presenting, via a user interface, one or more portions of the multimedia file, where the portions of the multimedia file are generated based on the one or more concepts presented in each of the sub-portions of text of the multimedia file.

In some examples, the method further includes visualizing a conceptual composition of the multimedia file with respect to one or more of amounts of concepts and temporal location via the user interface and using text of one of the sub-portions for directed similarity analysis or categorization, where the directed similarity analysis or categorization is done using machine learning.

In some examples, extracting the features from the text of the sub-portions comprises providing the sub-portions of the text derived from the multimedia file to a transformer to create embeddings associated with respective sub-portions of the text derived from the multimedia files, where identifying the concept clusters comprises positioning the embeddings in a high-dimensional semantic space and using a clustering algorithm in the high-dimensional semantic space.

In some examples, identifying the concept clusters comprises using a latent Dirichlet allocation (LDA) model.

In some examples, the method further includes generating one or more keywords representative of each of the one or more concepts based on the sub-portions of text in the identified concept clusters.

In some examples, presenting the one or more concepts presented in each of the sub-portions of text in the multimedia file further comprises presenting the one or more keywords representative of each of the one or more concepts.

In some examples, presenting the one or more concepts presented in each of the sub-portions of text of the multimedia file comprises presenting the one or more concepts and corresponding location markers of the multimedia file.

In some examples, the location markers include one of timestamps, page numbers, and page coordinates.

In some examples, the multimedia file includes text and one or more of images and graphics.

In some examples, the multimedia file is one of a video or audio file.

Example one or more non-transitory computer readable media are encoded with instructions which, when executed by one or more processors, cause the one or more processors to receive, via a user interface, a multimedia file to add to a knowledge base and separate text derived from the multimedia file into sub-portions. The instructions further cause the one or more processors to identify one or more concepts associated with each of the sub-portions of the multimedia file and present, via the user interface, one or more graphics displaying the one or more concepts associated with at least one sub-portion of the sub-portions of the multimedia file.

In some examples, identifying the one or more concepts associated with each of the sub-portions of the multimedia file comprises using a latent Dirichlet allocation (LDA) model.

In some examples, identifying the one or more concepts associated with each of the sub-portions of the multimedia file comprises providing the sub-portions of the text derived from the multimedia file to a transformer to create embeddings associated with respective sub-portions of the text derived from the multimedia file.

In some examples, identifying the one or more concepts associated with each of the sub-portions of the multimedia file comprises identifying concept clusters by positioning the embeddings in a high-dimensional semantic space and using a clustering algorithm in the high-dimensional semantic space.

In some examples, identifying the concept clusters further comprises determining a number of the concept clusters by calculating a silhouette score for the embeddings in the high-dimensional semantic space.

In some examples, the instructions further cause the one or more processors to generate one or more keywords representative of each of the one or more concepts based on the sub-portions of the multimedia file.

In some examples, the instructions further cause the one or more processors to present, via the user interface, the one or more keywords representative of each of the one or more concepts while presenting the one or more graphics displaying the one or more concepts associated with at least one sub-portion of the multimedia file, where the one or more graphics further display a frequency of the concepts associated with the at least one sub-portion of the multimedia file.

An example method disclosed herein includes receiving a new content item to add to a knowledge base including a plurality of content items and identifying a plurality of concepts in the new content item based on features extracted from sub-portions of text derived from the new content item, where the new content item is a multimedia file. The method further includes adding a node associated with each of the identified concepts in the new content item to the knowledge base and presenting a portion of the new content item to a user utilizing the knowledge base to learn a concept associated with the presented portion.

In some examples, identifying a plurality of concepts in the new content item comprises identifying a concept associated with each of the plurality of sub-portions.

In some examples, identifying the plurality of concepts in the new content item comprises using a latent Dirichlet allocation (LDA) model with the sub-portions of text derived from the content item.

In some examples, identifying the plurality of concepts in the new content item comprises identifying concept clusters for the sub-portions of the text generated using a transformer and performing a clustering algorithm on the embeddings, where the embeddings are placed in a high dimensional semantic space.

Additional embodiments and features are set forth in part in the description that follows, and will become apparent to those skilled in the art upon examination of the specification and may be learned by the practice of the disclosed subject matter. A further understanding of the nature and advantages of the present disclosure may be realized by reference to the remaining portions of the specification and the drawings, which form a part of this disclosure. One of skill in the art will understand that each of the various aspects and features of the disclosure may advantageously be used separately in some instances, or in combination with other aspects and features of the disclosure in other instances.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

The description will be more fully understood with reference to the following figures in which components are not drawn to scale, which are presented as various examples of the present disclosure and should not be construed as a complete recitation of the scope of the disclosure, characterized in that:
FIG. 1 illustrates an example system including a content management system, in accordance with various embodiments described herein,
FIG. 2 is a block diagram of a concept tracking component of a content management system, in accordance with various embodiments described herein,
FIG. 3 is a schematic diagram of an example computer system implementing various embodiments in the examples described herein,
FIG. 4 illustrates an example user interface displaying concepts within a content item in a content management system, in accordance with embodiments described herein,
FIG. 5 illustrates an example user interface displaying concepts within a content item in a content management system, in accordance with embodiments described herein,
FIG. 6 illustrates an example user interface displaying concepts within a content item in a content management system, in accordance with embodiments described herein.
FIG. 7 illustrates an example user interface displaying concepts within a content item in a content management system, in accordance with embodiments described herein,
FIG. 8 illustrates an example user interface displaying concepts within a content item in a content management system, in accordance with embodiments described herein,
FIG. 9 illustrates an example user interface for creating nodes in a content management system based on concepts within a content item, in accordance with embodiments described herein,
FIG. 10 illustrates an example user interface for creating nodes in a content management system based on concepts within a content item, in accordance with embodiments described herein,
FIG. 11 is a flowchart illustrating an example method of tracking concepts within content items in accordance with various embodiments described herein, and
FIG. 12 is a flowchart illustrating an example method of utilizing tracked concepts within a knowledge base in accordance with various embodiments described herein.

### DETAILED DESCRIPTION

Multimedia files are often used for online learning, and may be particularly effective when used within content management systems intended to provide personalized learning content to a user. Such multimedia files often include content associated with, covering, or otherwise targeted to specific topics or concepts. To teach such particular concepts, it may be effective to break down large multimedia files into smaller portions associated with the concepts, and present an end user (e.g., a student or other user receiving online training) with the portions of the multimedia file relevant to the concept or concepts being taught. This may be especially helpful in the context of content management systems providing personalized learning to a user. Such content management systems may adapt to the skills and abilities of a user to provide effective learning of various concepts. For example, a user may be provided with learning content associated with a particular concept, and may then be tested on the concept. Where the user demonstrates, through such testing, high understanding of the concept, the user may be presented next with content associated with another topic or concept. When, alternatively, the user demonstrates a low understanding of the concept, the user may be provided with more content associated with the original concept. Presenting a user with portions of multimedia files relevant to the concept or concepts being taught may improve the efficiency of such content management systems for learning, training, or examination.

Manually breaking up large files or pieces of content may be prohibitively time consuming. For example, for users to identify the presence and concentration of concepts within a large piece of content, the user consumes the entire piece of content. Such users may include, in various examples, administrators aiming to curate or screen existing content for the purpose of asset management or content placement in a learning or content management system. Assuming an average rate of reading and comprehension, it may take a human user up to three hours to read, analyze, and categorizing a 100-page document. If the reader is not an expert in the concepts presented in the content, consuming the content may take longer, and results may be less accurate. Accordingly, administrators managing content in a learning management system may spend large amounts of time analyzing and categorizing content to add to the learning management system, making curation of the learning management system more difficult and possibly leading to decreased adoption of learning management systems.

Further, manually breaking up large multimedia files may result in lower quality outcomes when compared to the methods described herein. For example, human users may rely heavily on topic headings, formatting, titles, and other cues when identifying various concepts within a piece of content. However, such headings may be inaccurate, leading to inconsistent or incorrect identification of topics. Further, human users are subjective and may break up or categorize content differently, identify different concepts within the content, and miss how concepts may be interrelated. Accordingly, content broken up by human readers may be less useful in teaching concepts, especially within a content management system using adaptive learning techniques.

A content management system used with the concept tracking described herein may generally use a process of contextualization to create a knowledge base representing various content items grouped according to concepts represented by or reflected within the content items (e.g., topics covered within the content items). Such a knowledge base may be used to, for example, provide trainings, assessments, or other types of online learning or examination by ensuring that participants are presented with content items from the representative concept groups and/or demonstrate knowledge of the various concept groups. For example, trainings or examinations centered around a particular concept group or topic may display content focused on or including those concepts, and eliminate or not present irrelevant content. Allowing a better use of time for the user (i.e., training or exam time is not wasted in watching or consuming off-concept content), and can increase understanding much faster than conventional learning or examination techniques. The content management system disclosed herein further provides visualization via a user interface, including relative or absolute amounts of individual concepts, collections of, or all concepts in a multimedia file as well as their physical and/or temporal location in the multimedia files.

The methods for concept tracking and the content management system described herein may use machine learning techniques to accurately visualize the conceptual composition of multimedia files and to break large pieces of content into smaller portions relevant to particular concepts. The smaller portions may then be further curated, categorized, or recommended based on similarity analysis to specific requirements, such as skill definitions, learning objectives, job categories, role descriptions, performance in continuous or end-point assessments, and the like. A knowledge base of the content management system may then be constructed using such smaller portions based on the concepts described in the smaller portions. Such machine learning techniques for concept tracking may detect hidden concepts common across several segments of written language or transcribed spoken language without knowing what such concepts are in advance. For example, concept probabilities may be cross-compared within individual multimedia files or across large bases of multimedia with files being physically organized and clustered based on conceptual probabilities. Detection of such concepts and subsequent categorization may be extremely time consuming or infeasible if performed by a human. For example, humans may be unable to identify such hidden concepts and may be unable to effectively analyze ever expanding amounts of multimedia.

Concept tracking methods described herein may utilize machine learning techniques to identify concepts at the level of sentences or paragraphs, exploiting the fact that when humans write a document, and particularly a technical or instructional document, sentences, paragraphs, and collections of paragraphs are often used to encode particular information about a specific subject. The concept tracking methods described herein identify this encoding and other latent relationships that human users may be unable to identify.

Though the content management system is described with respect to educational and/or instructional materials, such weighting and conceptual concept mapping may be used in other applications. For example, weighting of content and/or concepts within content models may be useful in, for example, multilingual content mapping, resume analysis, analysis of customer or employee feedback, categorization or further labelling of content based on existing topic definitions, labels or descriptions, or other groupings of content.

Various embodiments of the present disclosure will be explained below in detail with reference to the accompanying drawings. Other embodiments may be utilized, and structural, logical and electrical changes may be made without departing from the scope of the present disclosure.

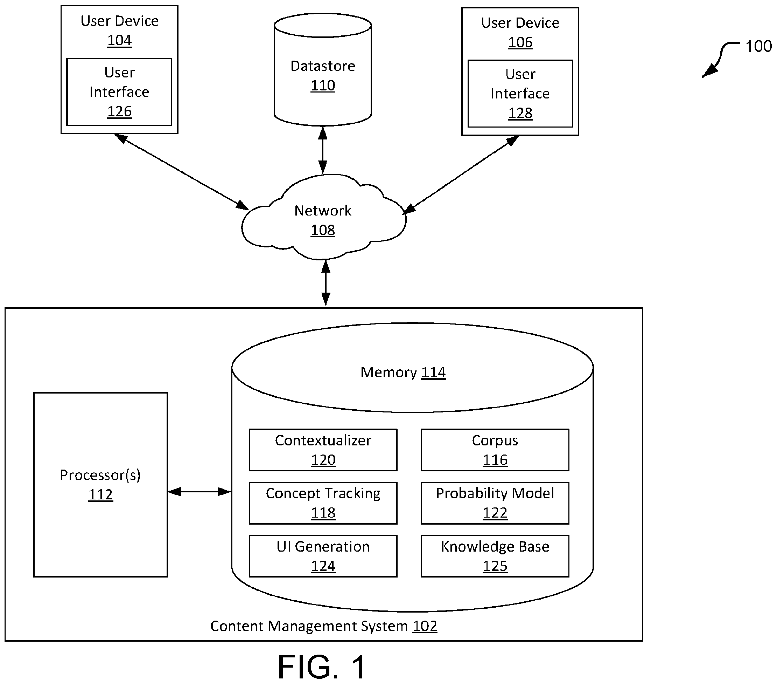

FIG. 1 illustrates an example system 100 for a content management system 102 in accordance with various embodiments of the disclosure. Various user devices (e.g., user device 104 and 106 of FIG. 1) may connect to the content management system 102 to access and utilize the content management system 102. The user devices 104 and 106 may access the content management system 102 using a mobile application, web page, desktop application, or other methods. The content management system 102 may, in various examples, be hosted in a cloud computing environment, accessible by the user devices 104 and 106. In other examples, the content management system 102 may reside on one or more servers (e.g., web servers) accessible by the user devices 104 and 106 and the datastore 110.

Generally, the user devices 104 and 106 may be devices belonging to an end user accessing the content management system 102. Such user devices 104 and 106 may be used, for example, to upload new content for inclusion in a knowledge base, to view concepts in content items in the knowledge base, and the like. In various embodiments, additional user devices may be provided with access to the content management system 102. Where multiple user devices access the content management system 102, the user devices may be provided with varying permissions, settings, and the like, and may be authenticated by an authentication service prior to accessing the content management system 102. In various implementations, the user devices 104, 106, and/or additional user devices may be implemented using any number of computing devices included, but not limited to, a desktop computer, a laptop, tablet, mobile phone, smart phone, wearable device (e.g., AR/VR headset, smart watch, smart glasses, or the like), smart speaker, vehicle (e.g., automobile), or appliance. Generally, the user devices 104 and 106 may include one or more processors, such as a central processing unit (CPU) and/or graphics processing unit (GPU). The user devices 104 and 106 may generally perform operations by executing executable instructions (e.g., software) using the processors.

In some examples, the user interface 126 at the user device 104 and/or the user interface 128 at the user device 106 may be used to provide information (e.g., new content items, user credentials, etc.) to, and display information (e.g., concepts within content items) from the content management system 102. In various embodiments, the user interface 126 and/or the user interface 128 may be implemented as a React, Javascript-based interface for interaction with the content management system 102. The user interface 126 and/or the user interface 128 may also access various components of the content management system 102 locally at the user devices 104 and 106, respectively, through webpages, one or more applications at the user devices 104 and 106, or using other methods. The user interface 126 and/or the user interface 128 may also be used to display content generated by the content management system 102, such as representations of the knowledge base, to user devices 104 and 106.

The network 108 may be implemented using one or more of various systems and protocols for communications between computing devices. In various embodiments, the network 108 or various portions of the network 108 may be implemented using the Internet, a local area network (LAN), a wide area network (WAN), and/or other networks. In addition to traditional data networking protocols, in some embodiments, data may be communicated according to protocols and/or standards including near field communication (NFC), Bluetooth, cellular connections, and the like. Various components of the system 100 may communicate using different network protocols or communications protocols based on location. For example, components of the content management system 102 may be hosted within a cloud computing environment and may communicate with each other using communication and/or network protocols used by the cloud computing environment. In various examples, the content management system 102 may be downloaded to the user devices 104 and 106 (e.g., via the network 108), such that the content management system 102 may be utilized at the user devices 104 and 106 while the user devices 104 and 106 are offline. For example, the content management system 102 may function as an application downloaded to the user devices 104 and 106.

The system 100 may include one or more datastores 110 storing various information and/or data including, for example, content, location/coordinates of concepts within content and probability of concepts within content, and the like. Content may include, in some examples, learning or informational content items and/or materials. For example, learning content items may include videos, slides, papers, diagrams, presentations, images, questions, answers, and the like. Additional examples of learning content may include product descriptions, sound clips, 3D models (e.g., DNA, CAD models), or 360-degree video. For example, the learning content may include testing lab procedures, data presented in an augmented reality (AR), virtual reality (VR), and/or mixed reality (MR) environment. In non-limiting examples, additional content that may be presented in an VR/AR/MR environment may include three-dimensional (3D) models overlaid in an AR environment, links of information related to product datasheets (e.g., marketing piece, product services offered by the company etc.), a script that underlies the video, voice or text that may be overlaid in an AR environment. As should be appreciated, the content can include various types of media, such as an existing video, audio or text file, or a live stream captured from audio/video sensors or other suitable sensors. The type and format of the content items may be varied as desired and as such the discussion of any particular type of content is meant as illustrative only.

In various implementations, the content management system 102 may include or utilize one or more hosts or combinations of compute resources, which may be located, for example, at one or more servers, cloud computing platforms, computing clusters, and the like. Generally, the content management system 102 is implemented by a computing environment which includes compute resources including hardware for memory 114 and one or more processors 112. For example, the content management system 102 may utilize or include one or more processors, such as a CPU, GPU, and/or programmable or configurable logic. In some embodiments, various components of the content management system 102 may be distributed across various computing resources, such that the components of the content management system 102 communicate with one another through the network 108 or using other communications protocols. For example, in some embodiments, the content management system 102 may be implemented as a serverless service, where computing resources for various components of the content management system 102 may be located across various computing environments (e.g., cloud platforms) and may be reallocated dynamically and automatically according to resource usage of the content management system 102. In various implementations, the content management system 102 may be implemented using organizational processing constructs such as functions implemented by worked elements allocated with compute resources, containers, virtual machines, and the like. In various examples, the content management system 102 may be downloaded as an application to the user devices 104 and 106, such that the content management system 102 may be used offline. In these examples, the content management system 102 and the datastore 110 may be local to the user devices 104 and 106.

The memory 114 may include instructions for various functions of the content management system 102, which, when executed by the processor 112, perform various functions of the content management system 102. For example, the memory 114 may include instructions for implementing a contextualizer 120, concept tracking 118, and a UI generator 124. The memory 114 may further include data utilized and/or created by the content management system 102, such as a corpus 116, probability model 122, and/or knowledge base 125. Similar to the processor 112, memory resources utilized by the content management system 102 and included in the content management system 102 may be distributed across various physical computing devices.

In various examples, when executed by the processors 112, instructions for the contextualizer 120 may generate the corpus 116 from various content items (e.g., content items stored at datastore 110), train and/or generate the probability model 122 to group concepts reflected in the corpus 116, and generate the knowledge base 125 using the probability model 122 and the content items. For example, the contextualizer 120 may process content items to generate the corpus 116. To process content items, the contextualizer 120 may generally convert content items into a data format which can be further analyzed to create the knowledge base 125. For example, the contextualizer 120 may include language processing, image processing, and/or other functionality to identify words within the content items and generate the corpus 116 including the significant and/or meaningful words identified from the content items. In various examples, the contextualizer 120 may use language and/or image processing to obtain words from the content items. The contextualizer 120 may then identify significant words using various methods, such as natural language processing to remove elements of the text such as extraneous characters (e.g., white space, irrelevant characters, and/or stem words extracted from the content) and remove selected non-meaningful words such as "to", "at", "from", "on", and the like. In forming the corpus, the contexutalizer 120 may further remove newlines, clean text, stem and/or lemmatize words to generate tokens, remove common stop words, and/or clean tokens. In such examples, the corpus 116 may include groupings of meaningful words appearing within the content items.

The contextualizer 120 may generate and/or train the probability model 122 using the corpus 116. In various examples, the probability model 122 may be generated or trained using topic modeling, such as a latent Dirichlet allocation (LDA). In various examples, the probability model 122 may include statistical predictions or relationships between words in the corpus 116. For example, the probability model 122 may include connections between words in the corpus 116 and likelihoods of words in the corpus 116 being found next to or otherwise in the same content item as other words in the corpus 116. In some examples, the probability model 122 may infer positioning of documents or items in the corpus 116 in a topic.

In various examples, the contextualizer 120 may form content groupings when generating and/or training the probability model 122. For example, the process of training the LDA model may result in a set of topics or concepts. An example of a concept may include a combination of words that have a high probability for forming the context in which other phrases in the corpus 116 might appear. For instance, in training a corpus 116 about `CRISPR' (specialized stretches of DNA in bacteria and archaea), the LDA model may include "guide RNA design" as a topic or concept because it includes a high probability combination of words that other words appear in the context of CRISPR. In some examples, a topic may be an approximation of a concept. Words that are found within close proximity with one another in the corpus 116 are likely to have some statistical relationship, or meanings as perceived by a human.

Once the probability model 122 is generated, the contextualizer 120 may generate the knowledge base 125 using the probability model 122 and the content items. The knowledge base 125 may be, in various examples, a graph or other type of relational or linking structure that includes multiple nodes, the nodes representative of various content items (e.g., content items stored at datastore 110). The nodes of the knowledge base 125 may store the content items themselves and/or links to such content items. The graph may include multiple edges between nodes, where the edges include weights representing probabilities of two corresponding topics (nodes) belonging to the same concept or related concepts. Such probabilities may be used to position nodes representing the content items relative to one another in space. In various examples, edges between nodes of the knowledge base 125 may be weighted, where the weight represents a strength of the relation between nodes connected by the edge. As such, the knowledge base 125 may represent sets of relationships between the content items correlating to the knowledge base 125.

In generating the knowledge base 125, the contextualizer 120 may construct a graph of the knowledge base 125 by, for example, generating nodes of the knowledge base 125 from content items and topics identified in the probability model 122. Generating the nodes may include placing the nodes within a space of the knowledge base 125 based on the concepts included in the content item associated with the node.

The contextualizer 120 may further group nodes of the knowledge base 125 into content groupings. In various examples, the contextualizer 120 may use a clustering algorithm to create content groupings and organize the nodes into clusters. The contextualizer 120 may first generate a number of content groupings and determine centroids of the content groupings. In some examples, initial content groupings may be determined using the probability model 122. The contextualizer 120 may use a centroid value for the content groupings obtained from the probability model 122 or may initially assign a random value (e.g., spatial value) as a centroid of the content group. The contextualizer 120 may then assign each node of the knowledge base 125 to a content grouping based on the closest centroid to the node. Once all nodes have been assigned to a content group, new centroids may be re-calculated for each group by averaging the location of all points assigned to the content group. In various examples, the contextualizer 120 may repeat the process of assigning nodes to content groups and re-calculating centroids of the concept groups for a predetermined number of iterations or until some condition has been met (e.g., the initial centroid values match the re-calculated centroid values). As a result of the process of calculating the centroids, nodes may be assigned to content groups by the contextualizer 120. In various examples, additional data may be used in combination with additional machine learning and deep learning to weight, modify, update, or alter the shape of the knowledge base 125 and the relationships between content and concepts.

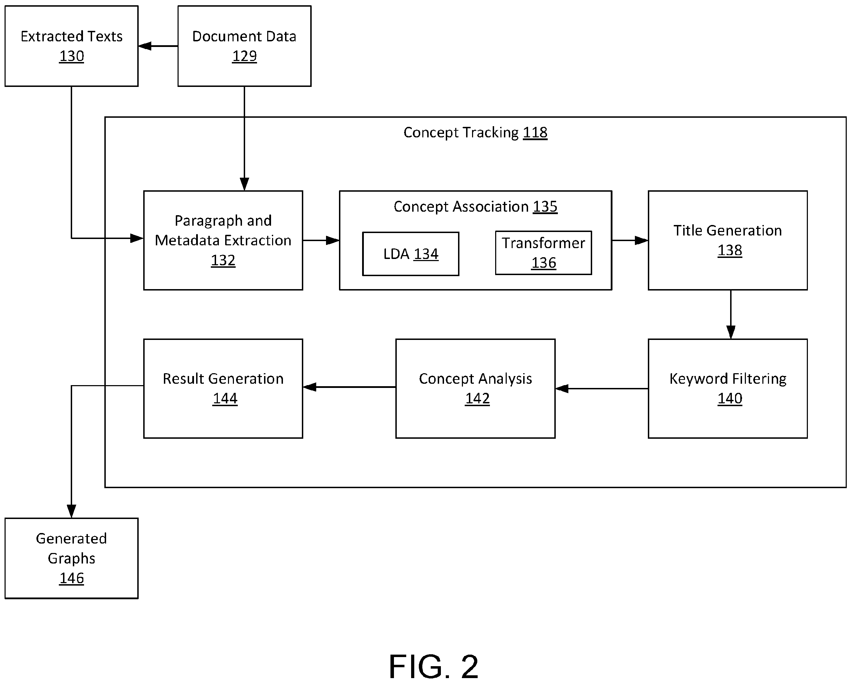

In some examples, instructions for concept tracking 118 may identify various concepts within a single content item to be added to the knowledge base 125. With reference to FIG. 2, concept tracking 118 may include various sub-modules or sub-components used to perform different portions of concept tracking 118. For example, paragraph and metadata extraction 132 may receive extracted texts 130 to begin the process of concept tracking. For example, extracted texts 130 may include plain text extracted from textual documents, by way of removing elements (e.g., formatting) from the documents to leave plain text to use for concept tracking. Where the content item is video or audio content, text may be extracted from transcripts of the content. In some examples, the audio may be transcribed into a script to be processed by paragraph and metadata extraction 132. Where the content item is an image or group of images (e.g., graphics, graphs, and the like), the extracted text 130 may be obtained using optical character recognition (OCR) or pre-trained computer vision models. In some examples, extracted text 130 of images may include text descriptions of image within the content item.

Paragraph and metadata extraction 132 may generally break a large content item into smaller pieces used to identify concepts within the content item. Paragraph and metadata extraction 132 may include instructions for text filtering of content items. For example, paragraph and metadata extraction 132 may optionally remove graphics, content pages, tables, headers and footers, numeric symbols, bullet points, reference lists or bibliographies, or other elements from the text before processing the text into paragraphs or chunks.

Paragraph and metadata extraction 132 may include logic and functionality for processing the different types of extracted texts 130. Paragraph and metadata extraction 132 may further receive original document data 129 for extracting paragraphs and metadata. For example, paragraph and metadata extraction 132 may, for formatted documents, use formatting information (e.g., headings, differing font size, differing font strengths, and the like) to break the content item into meaningful pieces, which may or may not be traditional paragraphs. For example, a formatted document may be broken into pieces or chunks around phrases in larger sized font, which may be headings. Paragraph and metadata extraction 132 may further, for unformatted text, used fixed size chunks that are representative of average paragraph lengths. For example, unformatted text may be broken into chunks of 120, 150, or other numbers of words. In some examples, the number of words may be used as a minimum, and a chunk may include the minimum number of words, plus some additional number of words until punctuation indicating the end of a sentence is reached. Paragraph and metadata extraction 132 may further process text including multiple columns differently. For example, page coordinates may be used to ensure the correct paragraphs are captured. For two columns, both pages and columns are considered, and x coordinates and page numbers may be compared to capture paragraphs placed in two different columns or across pages.

For audio content, paragraph and metadata extraction 132 may consider punctuation, threshold numbers of words, time frame thresholds, sound emphasis (e.g., changes in amplitude of sound), changes in audio speech (e.g., changes in speed or pitch of speech which may indicate changes in speaker), and time gaps when determining how to split text corresponding to, for example, a video or audio file into paragraphs or chunks. Transcripts associated with such audio and video data may include time stamps, which paragraph and metadata extraction 132 may use to help break up the text. For example, paragraph and metadata extraction 132 may choose a stopping point (e.g., at the end of a caption). If the caption ends with sentence-ending punctuation, paragraph and metadata extraction 132 may check if the time length of the paragraph exceeds a selected time limit threshold. If so, the paragraph or chunk may end at the selected point. A time gap condition may split captions between chunks based on the time elapsed between the captions. For example, if a larger amount of time has passed between the captions, it is more likely that the captions are directed to different concepts, and the captions may be split into different paragraphs or chunks. Like for pure text files, paragraph and metadata extraction 132 may further split transcripts of audio or video content based on a number of words.

Concept association 135 may generally associate each of the paragraphs or chunks identified by paragraph and metadata extraction 132 with concepts. Concept association 135 may further extract keywords associated with identified concepts. Concept association 135 may include instructions for several approaches to concept association based on the type of input received. For example, concept association 135 may include instructions for a probabilistic approach to concept association and a semantic approach to concept association.

The probabilistic approach to concept association may utilize an LDA 134 of concept association 135. In the probabilistic approach, concept association 135 may first pre-process given text, which may include, in various examples, removal of English stopwords (e.g., a, an, the, of, in, and the like), removal of punctuation, and conversion of sentences to words. Words may be removed, in some examples, either manually or automatically based on frequency of the words or other statistics. Such optional removal of words may allow for fine tuning of the corpus as desired. Pre-processing may further include extraction of unique words for each paragraph along with word frequency in the paragraph. Such unique words and word frequency may be used to form a corpus used by the LDA 134. During the generation of the corpus words with the same stem may be unified for purposes of determining word frequency. For example, 'waits', `wait', and 'waiting' may all correspond to the same stem of 'wait.'

The probabilistic approach may further include identification of optimal topic clusters. For example, an optimal number of clusters may be identified by concept association 135 by evaluating the output of the LDA 134 and maximizing a coherence score. For example, the LDA 134 may be run or executed for a number of cluster sizes. For each iteration, concept association 135 may estimate a coherence score for the results provided by the LDA 134. The process may be repeated with different cluster sizes until the coherence score stabilizes or a maximum cluster size is reached. The LDA 134 may then be generated again using the cluster size obtained through the iterative process. The generated LDA 134 may include information regarding topic probabilities per paragraph and keyword distribution per topic. The probabilistic approach may utilize the generated LDA 134 to associate a dominant topic with each paragraph based on topic association probabilities for multiple topics associated with the paragraph. The LDA 134 may also be used to extract keywords for each topic using a similar probabilistic approach.

Concept association 135 may further include instructions for a semantic approach. The semantic approach may be (or may include) a transformer-based approach. The semantic approach may allocate topics based on the semantics or meaning of the paragraph. The transformer-based approach may utilize the transformer 136. In the transformer-based approach, concept association 135 may pre-process the text to remove punctuation and convert each paragraph to an embedding, which may be a high-dimensional vector encoding the meaning of the paragraph. The transformer 136 may be used to create the embeddings and may be any type of transformer model, such as the MiniLM-L6-v2, or other similar transformer.

The embeddings representing the paragraphs may be placed in a high-dimensional semantic space. To identify optimal topic clusters, concept association 135 may use k-means (other similar HBDscan) clustering to cluster the embeddings in the high-dimensional semantic space. An optimal number of clusters may be determined by maximizing the silhouette score for the embeddings in the clusters. Distances used in calculating the silhouette score may be computed using cosine similarity, Euclidian distance, or other methods. After the number of clusters are determined, the paragraphs may be clustered into the number of clusters.

In the transformer-based approach, concept association 135 may further generate keywords using semantic analysis. Nouns may be filtered from a cluster text (e.g., text of multiple paragraphs included in a cluster) to be used as potential keywords. Embeddings may then be generated (e.g., using the transformer 136) for each of the potential keywords and such embeddings may be compared to an embedding of the cluster text. The embedding of the cluster text may, in some examples, be generated by averaging the embeddings of the paragraphs in the cluster. The embeddings of the potential keywords and the embedding of the cluster text may be compared to obtain a similarity score. Such comparison may use cosine similarity, Euclidian distance, or other methods of comparison. The potential keywords may be sorted by the calculated similarity score, with the keywords with the highest similarity scores (e.g., the 20 highest scoring keywords) may be selected as keywords for the cluster, which may represent a topic or concept.

Both the probabilistic approach and the transformer-based approach may generate dominant topics or concepts for each paragraph, and topic keywords associated with each topic or concept. Concept tracking 118 may further include instructions for title generation 138, which may use cluster text generated by concept association 135 when creating concept clusters. In some examples, title generation 138 may use the topic keywords from concept association 135 and compare the topic keywords to the cluster text using the transformer 136. In various examples, title generation 138 may involve a summarization of cluster text produced using Natural Language Processing models including, for example, deep learning models such as transformers. For example, title generation 138 may use the transformer 136, or another transformer (e.g., a model accessible by concept tracking 118). In some examples, title generation 138 may join some number of the topic keywords generated by concept association 135 (e.g., 2 or 3 of the keywords) to create a title for a cluster (e.g., corresponding to a concept or topic).

Concept tracking 118 may further include instructions for keyword filtering 140. Keyword filtering 140 may utilize the topic keywords generated by concept association 135 to verify that keywords are unique across clusters and to prevent duplicate keywords for individual clusters. Keyword filtering 140 may further select the most relevant keywords (e.g., the 5 most relevant keywords) to represent a concept or topic. For example, keyword filtering 140 may consider all of the topic keywords for a particular cluster, and may remove duplicate keywords, including keywords with the same stem. Keyword filtering 140 may then remove topic keywords that appear for more than one cluster. For example, keyword filtering 140 may assign a duplicate keyword to the cluster to which the keyword has the highest relevance. Relevance may be determined by, for example, frequency of the keyword in the cluster text (with higher frequency indicating a more relevant keyword), a similarity score, or using other methods. In some examples, keyword filtering 140 may utilize a similarity score between cluster text and each topic keyword to rank the topic keywords for each cluster, retaining a number of the most relevant (e.g., highest similarity score) topic keywords.

Concept tracking 118 further includes instructions for concept analysis 142. Concept analysis 142 may determine, for an entire content item, the most dominant concepts or topics per each page, time interval, or other sub-portion of the content item. For example, concept analysis may consider concepts represented for each paragraph or chunk included in the relevant sub-portion of the content item, and determine the most dominant concept represented in the sub-portion. For example, the most dominant concept may be the concept associated with the majority or largest number of paragraphs in the sub-portion of the content item. Dominant topics may be then provided to result generation 144. In some examples, if two or more paragraphs or sub-portions are associated with the same concept, they may be combined into a single chunk, sub-portion, or node and/or could be highlighted as a single unit in the user interface, by way of a colored bounding box or other form of highlighting in a user interface.

Result generation 144 may generally format the results of concept tracking 118 for use by the content management system 102 (e.g., for creation of user interfaces, updating the knowledge base 125, and/or performing other tasks). For example, result generation 144 may, for audio files, determine relevant timestamps for the dominant topics generated by concept analysis 142. Where two consecutive groupings of timestamps are associated with the same dominant topic, result generation 144 may combine the two groupings of timestamps. In some examples, two consecutive paragraphs may be associated with the same concept, and may be combined into a single text for purposes of node creation. In another example, where timestamps are associated with two different concepts, but under some threshold value, the timestamps may be combined as being associated with the same dominant topic. In such examples, small intersecting text may be removed or highlighted as an outlier in an output user interface. The combined grouping may then be, for example, displayed to show where the concept is located within the audio file and/or used to split the content item for creation of new nodes in the knowledge base 125. Result generation 144 may further associate each identified concept with keywords or other tags.

Returning to FIG. 1, in some examples, once concepts are identified in a content item, the contextualizer 120 may adjust and/or rebuild the knowledge base 125 by creating a node in the knowledge base 125 for each concept included in the content item. For example, concept tracking 118 may isolate or otherwise provide text of a content item related to each concept represented in the content item. The contextualizer 120 may then repeat the process of contextualization of the content items including the text portions representing the concepts within a content item as their own nodes. For example, the contextualizer 120 may generate the corpus 116 based on the updated content items, re-train and/or generate the probability model 122 using the updated corpus 116, and generate an updated knowledge base 125 based on the updated content items and the re-generated probability model 122. The updated knowledge base125 may include new content groupings and/or may be reshaped based on the additions of the new concept nodes to the knowledge model 125 or by the provision of additional training data.

When executed by the processors 112, the instructions for UI generation 124 may access the knowledge base 125 and/or various components of concept tracking 118 to generate various user interfaces (e.g., user interface 126 and 128) at user devices utilizing and/or accessing the content management system 102. For example, UI generation 124 may display representations of the knowledge base 125, representations of content groupings (e.g., tags, concepts, or other indicators of concepts represented in a content grouping), content, listings or other representations of concepts included within a content item. UI generation 124 may further generate interfaces configured for upload of new content items.

In various examples, UI generation 124 may generate various interfaces displaying representations of the concepts within one or more content items. For example, various interfaces may display locations of concepts within a content item, which locations may be expressed differently depending on the multimedia type of the original content item. For example, for a text or mixed media document (e.g., a PDF document) organized by pages, UI generation 124 may generate an interface displaying which concept or concepts are present on which pages of the document. Such information may be displaying in varying formats, including graphs, charts, and the like, as described further herein. In another example, where the content item is a video or audio file including time stamps, UI generation 124 may generate an interface displaying timestamps associated with various concepts, as described further herein. UI generation 124

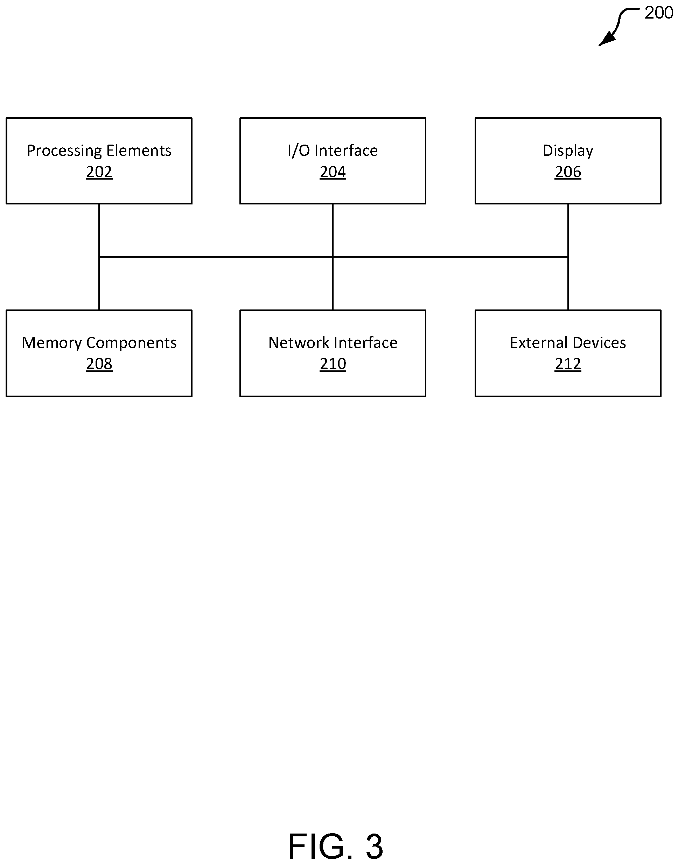

FIG. 3 shows a simplified block structure for a computing device 200 that may be used with the system 100 (in FIG. 1) or integrated into one or more components of the system. For example, the content management system 102, user devices 104 and 106, or one or more other devices in communication with or included in the content management system 102 may include one or more of the components shown in FIG. 3 and be used to implement one or more blocks or execute one or more of the components or operations disclosed herein. In FIG. 3, the computing device 200 may include one or more processing elements 202, an input/output interface 204, a display 206, one or more memory components 208, a network interface 210, and one or more external devices 212. Each of the various components may be in communication with one another through one or more busses, wireless means, or the like.

The processing element 202 may be any type of electronic device capable of processing, receiving, and/or transmitting instructions. For example, the processing element 202 may be a central processing unit, microprocessor, processor, or microcontroller. Additionally, it should be noted that some components of the computer 200 may be controlled by a first processor and other components may be controlled by a second processor, where the first and second processors may or may not be in communication with each other.

The memory components 208 are used by the computer 200 to store instructions for the processing element 202, as well as store data, such as the corpus 116, probability model 122, knowledge base 125, and the like. The memory components 208 may be, for example, magnetooptical storage, read-only memory, random access memory, erasable programmable memory, flash memory, or a combination of one or more types of memory components.

The display 206 provides visual feedback to a user, such as displaying questions or content items or displaying recommended content, as may be implemented in the user interfaces 124 and/or 126 (FIG. 1). Optionally, the display 206 may act as an input element to enable a user to control, manipulate, and calibrate various components of the computing device 200. The display 206 may be a liquid crystal display, plasma display, organic light-emitting diode display, and/or other suitable display. In embodiments where the display 206 is used as an input, the display may include one or more touch or input sensors, such as capacitive touch sensors, resistive grid, or the like.

The I/O interface 204 allows a user to enter data into the computer 200, as well as provides an input/output for the computer 200 to communicate with other devices or services. The I/O interface 204 can include one or more input buttons, touch pads, and so on.

The network interface 210 provides communication to and from the computer 200 to other devices. For example, the network interface 210 allows the content management system 102 to communicate with the datastore 110, the user device 104, and/or the user device 106 via a communication network 108 (in FIG. 1). The network interface 210 includes one or more communication protocols, such as, but not limited to WiFi, Ethernet, Bluetooth, and so on. The network interface 210 may also include one or more hardwired components, such as a Universal Serial Bus (USB) cable, or the like. The configuration of the network interface 210 depends on the types of communication desired and may be modified to communicate via WiFi, Bluetooth, and so on.

The external devices 212 are one or more devices that can be used to provide various inputs to the computing device 200, e.g., mouse, microphone, keyboard, trackpad, or the like. The external devices 212 may be local or remote and may vary as desired. In some examples, the external devices 212 may also include one or more additional sensors that may be used in obtaining user's assessment variables.

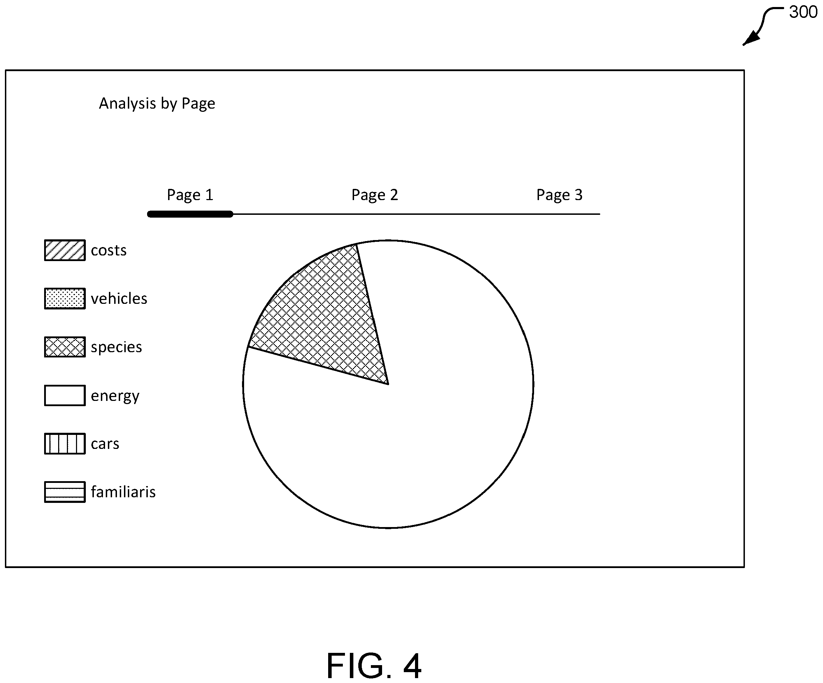

FIGs. 4-10 illustrate various user interfaces 300, 400, 500, 600, 700, 800, and 900 displaying concepts within a content item in a content management system. The user interfaces 300, 400, 500, 600, 700, 800, and 900 may be generated by the user interface 124 using information from concept tracking 118 and/or the knowledge base 125. The user interfaces 300, 400, 500, 600, 700, 800, and 900 may be displayed at user devices (e.g., user devices 104 and 106) through user interfaces (e.g., user interface 126 and user interface 128).

Turning to FIG. 4, the user interface 300 displays dominant concepts or topics per page of a document. The user interface 300 generally displays the dominant concepts on a page using a pie chart, though other types of graphs, charts, and visuals are contemplated. The user interface 300 further includes options for viewing the chart for various pages of the document, by selecting the relevant page from a menu within the user interface 300. The chart may include a key showing various concepts present throughout the document. The different patterns, colors, or other labels may be shown associated with dominant keywords for a concept or topic (e.g., keywords generated by keyword filtering 140). For example, using the key presented in the user interface 300, a user may note that the first page of the relevant document mostly includes concepts relating to energy, with a small portion relating to species. Accordingly, the first page of the document is likely useful in instructing or teaching on the concept of energy and may be useful to teach concepts related to species. Such information may, for example, assist an instructor, user choosing content to teach certain concepts, user evaluating the contents of a knowledge base 125, or other users by showing how much of a page of content is directed to a particular concept.

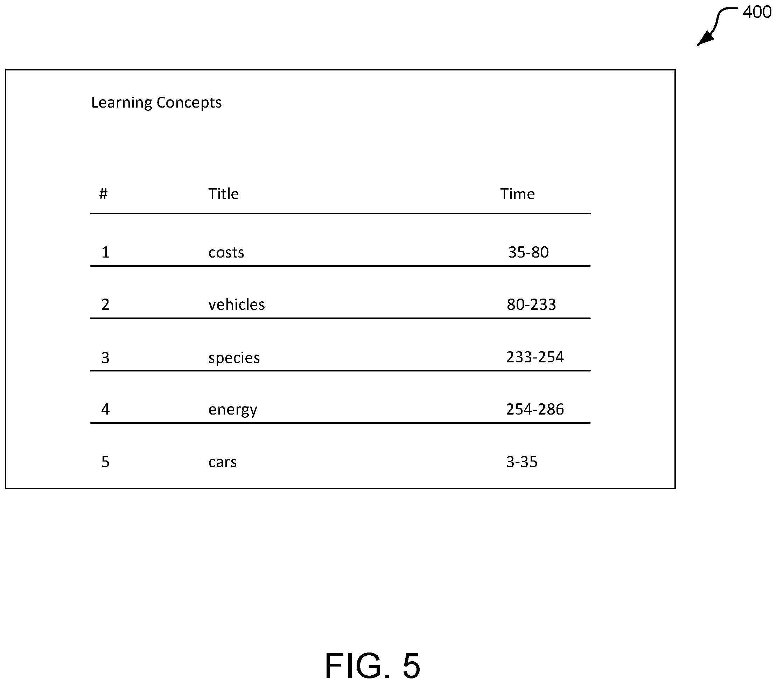

Turning to FIG. 5, the user interface 400 presents similar information as the user interface 300, with respect to an audio, video, or other type of content item associated with timestamps. For example, the user interface 400 includes a chart showing the dominant concept (labeled, e.g., using relevant keywords produced by keyword filtering 140) for various ranges of timestamps of the content. As described herein, the ranges of timestamps may be analogous to paragraphs or chunks used by concept tracking 118 for analysis of the content item and/or may be groupings of such paragraphs or chunks. For example, where three consecutive paragraphs are all directed to the same dominant concept, concept tracking 118 (e.g., concept analysis 142 and/or result generation 144) may group the paragraphs together into one time segment for purpose of the user interface 400.

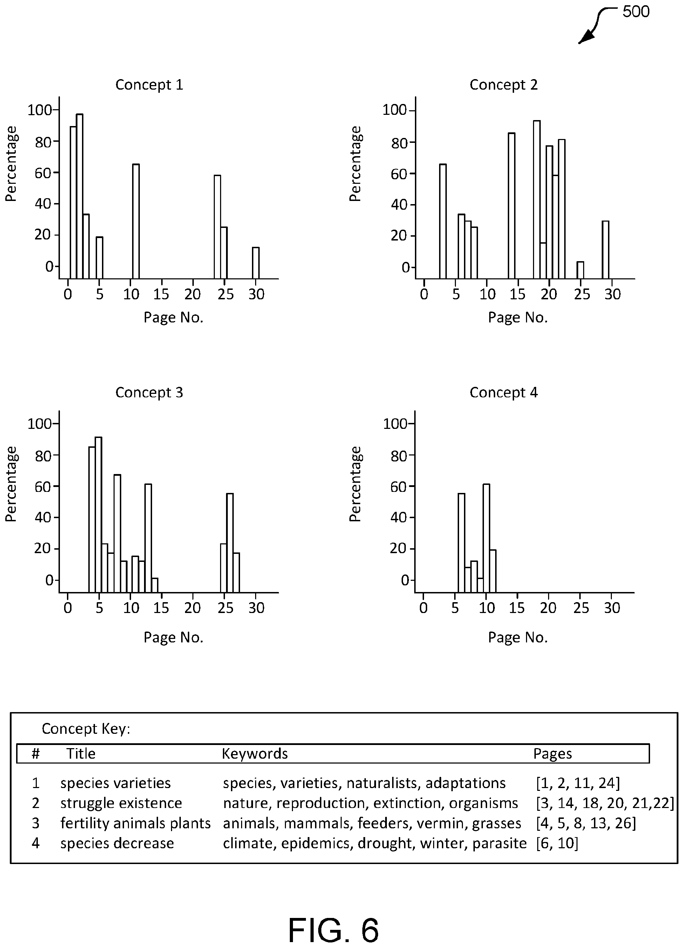

FIG. 6 depicts a user interface 500 including graphics showing the distribution of various concepts within a content item. Though the graphics in FIG. 6 are shown at the content item level, in various examples, similar graphics may display the distribution of various concepts at the sentence or paragraph level. Though the graphics are shown referencing page numbers (e.g., for a text or PDF document), similar graphics may be used referencing time stamp ranges or other relevant divisions for other types of content (e.g., video or audio files). The user interface 500 may be useful to visualize the distribution of various concepts over the entirety of a content item. For example, the user interface 500 shows at what pages of a document various concepts appear, as well as displaying a percentage for the concept which may reflect, for example, how much of the page (or other portion of the content) is directed to the relevant concept. The graphics in the user interface 500 are shown as bar graphs, though other types of graphs, charts, or visualizations may be used in various examples.

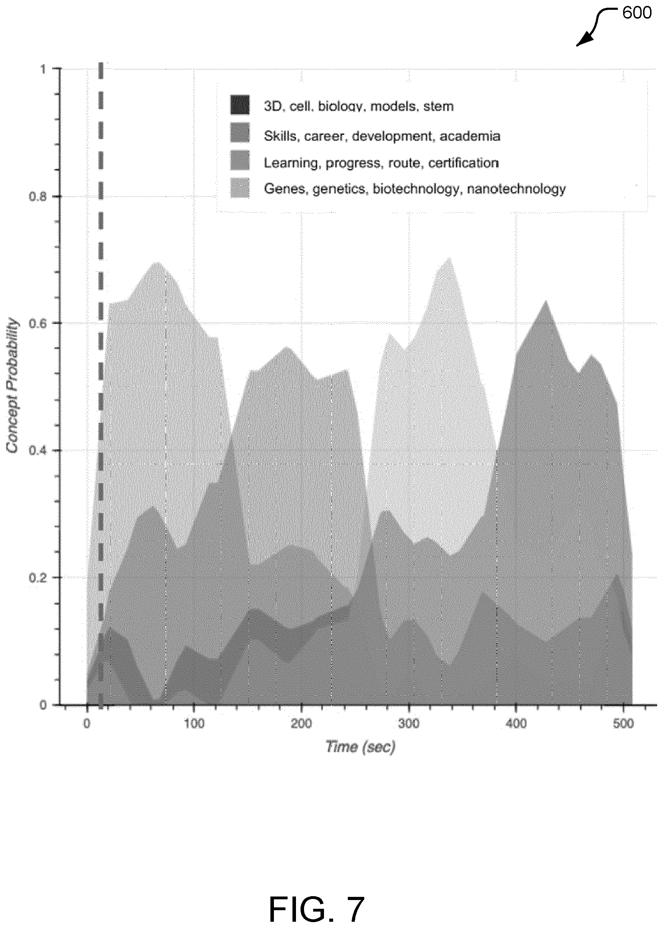

FIG. 7, similarly, shows a user interface 600 which provides a visualization of concepts within a content item. Though the visualization is shown referencing time stamp ranges (e.g., for an audio or video document including time stamps), a similar graphic may be used referencing page numbers or other relevant divisions for other types of content (e.g., for a text or PDF document). The visualization includes overlapping curves, which each correspond to a concept within the content item. The visualization may be useful to understand how various concepts overlap within a content item.

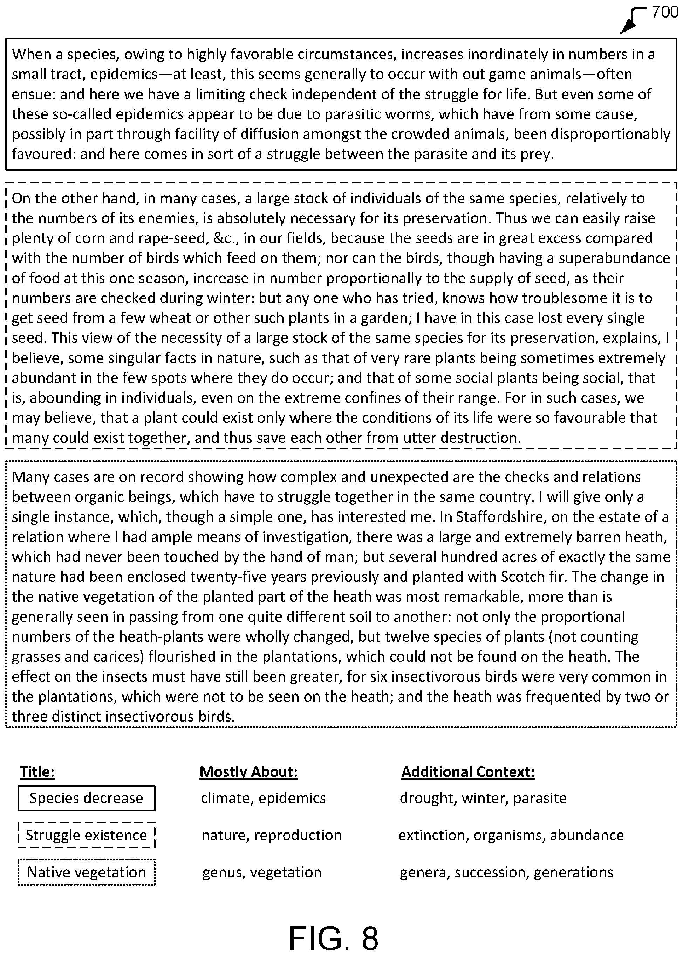

FIG. 8 shows a user interface 700 displaying concepts within a content item. The user interface 700 displays the text of a content item and shows the concepts included relative to a particular portion of the text. The text may, in various examples, be from a text based document, include descriptions of images in a content item, be a transcript from an audio or video file, and the like. In the example of FIG. 8, portions of the content item are contained in boxes with differing appearances based on concepts included in the portion. For example, the borders of the boxes may be presented in different colors, in differing patterns (e.g., solid lines, broken lines, and the like), with different weights, and the like. A key within the user interface 700 displays the concepts (e.g., under a `mostly about' heading) and additional keywords (e.g., under an `additional context' heading) associated with the concepts included in the text portions. Though the text portions are shown as paragraphs, text portions, in various examples, may be analyzed at the sentence level, page level, or in other groupings. The user interface 700 may display, to a user (e.g., an administrative user) the content and the concepts in the content at the same time, allowing for verification of the concepts in the content by the user.

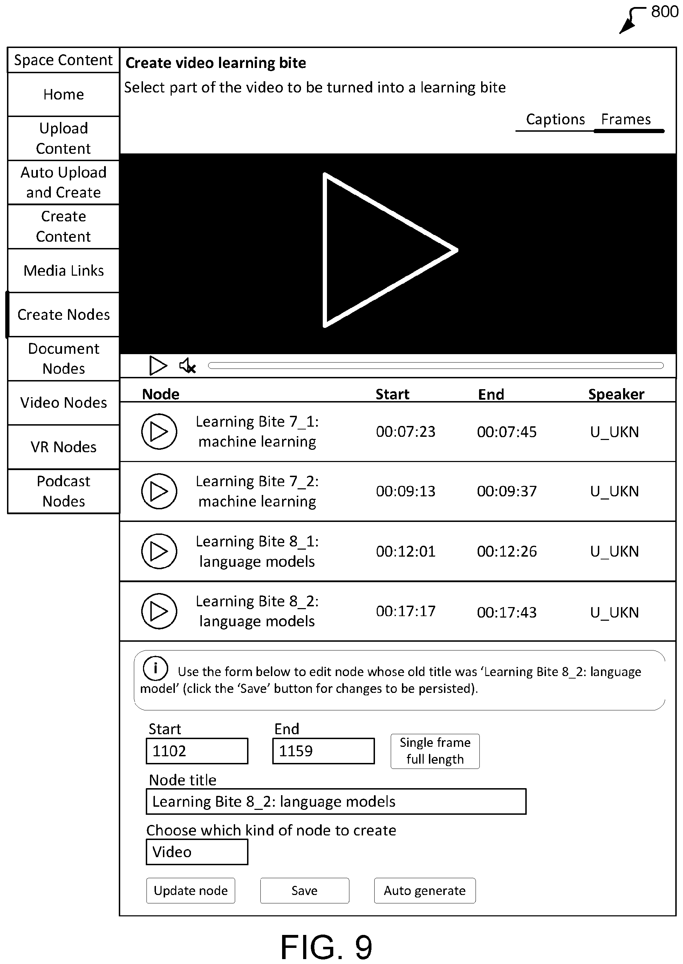

FIG. 9 shows a user interface 800 for creating nodes in a content management system based on concepts within a content item. For example, the user interface 800 may be used by a user (e.g., an administrative user curating a knowledge base) to utilize the content management system 102 to identify concepts within video or audio content. The user interface 800 may include a control panel including options (e.g., a `Create Nodes' element) to upload content (e.g., multimedia files) to the content management system 102 to generate nodes from the content. For example, after uploading multimedia content, the user interface 800 may display captions generated from the multimedia content. For example, the captions may be viewed by selecting a 'Captions' element in the user interface 800. In some examples, the captions may further be edited via the user interface 800. A 'Frames' element (shown selected in FIG. 9) allows a user to utilize the content management system 102 to recommend video nodes based on relative concept coverage in a specific context of a knowledge base, which may improve contextual relevance. The user interface 800 may further display recommended nodes generated by the content management system 102, including time stamps associated with the start and end of the multimedia content associated with the node, an option to view the portion of the multimedia content associated with the node, and an option to edit the created node. For example, a user may view the multimedia content associated with the node recommended by the content management system 102 and decide that there is content within the multimedia content that is not coherent or cohesive or not associated with the concept. The user may then utilize elements of the user interface 800 to adjust start and end times to improve the multimedia content, update the title of the node, choose a type of node to generate, and the like. After nodes are created using the user interface 800, the knowledge base 125 may be regenerated including the newly generated nodes, which may then be used to present the multimedia content to an end user.

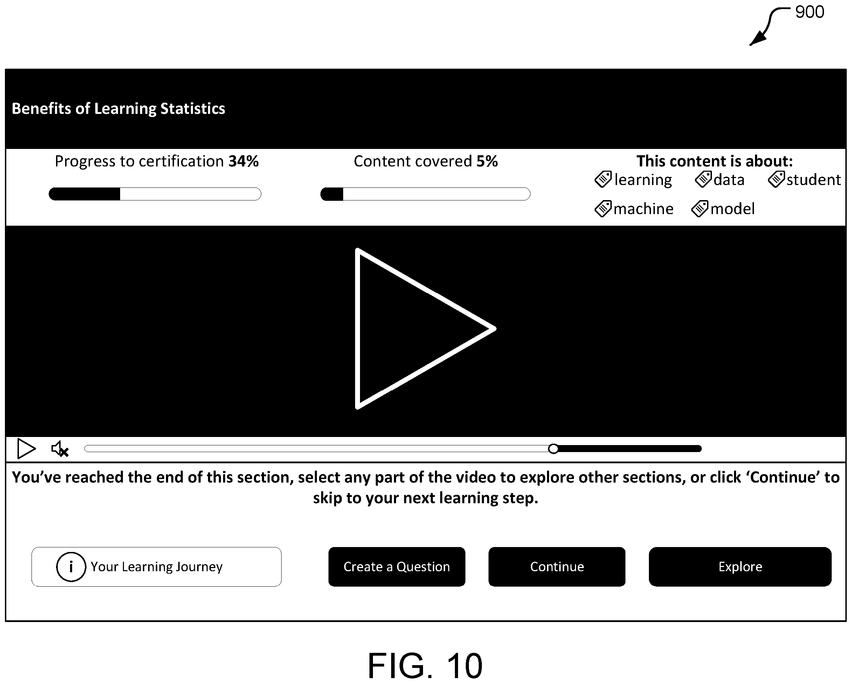

FIG. 10 shows a user interface 900 for presenting multimedia content to an end user in a content management system based on concepts within a content item. The user interface 900 may be presented to a user utilizing an adaptive learning system including nodes created using the content management system 102. For example, the user interface 900 may present multimedia content associated with nodes generated using the user interface 800. The user interface 900 may include concept labels or content titles (which may be, for example, keywords associated with the concept of the node), which may prime an end user (e.g., a learner) to show concepts addressed in the multimedia content. The user interface 900 includes an embedded media player allowing the learner to view the content and, after the content is viewed, a message that the learner may view other parts of the content item or continue onto the next section recommended by the adaptive learning system.

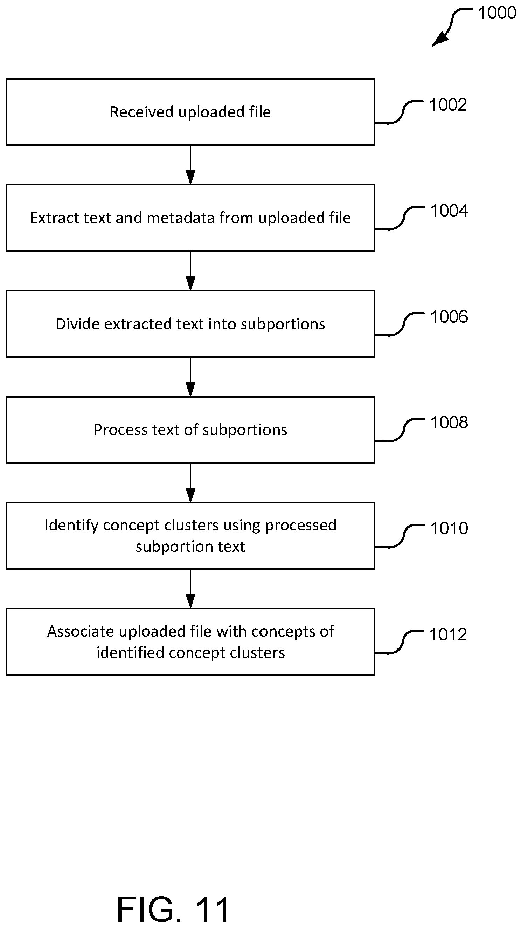

FIG. 11 illustrates an example method 1000 of tracking concepts within content items. At block 1002, the uploaded file is received. The uploaded file may be a multimedia file, for example, a file including text, images, and other content. In some examples, uploaded files may be audio, video, or other types of files. In various examples, the file may be uploaded either as part of a batch or individually such as through a user interface (e.g., user interface 126 or 128) generated by UI generation 124. After upload, the file may be passed or provided to concept tracking 118.

Text and metadata are extracted from the uploaded file at block 1004. Text may be extracted using various techniques, such as optical character recognition (OCR) for text in a PDF document or other image, audio transcription for audio or video content, extraction of plain text from a formatted document, and the like. Extraction of plain text from a formatted document may include removal of graphics, tables, headers and footers, numeric symbols, bullet points, or other elements from the text to obtain plain text. Other types of text, such as text describing pictures, graphics, or other images, may also be extracted from various content items. Such descriptive text may be generated, in various examples, using image recognition or other techniques. In various examples, extracted texts 130 associated with a content item may be provided to paragraph and metadata extraction 132 of concept tracking 118 for the extraction of metadata. Metadata may include, in various examples, time stamps for video and audio content items corresponding to the extracted text. For example, where the extracted text is a transcript of spoken words from an audio file, the metadata may indicate at what timestamp of the audio file the spoken words corresponding to the extracted text appear. Metadata may further include the location and characteristics of elements removed from and/or altered in the content item during text extraction. For example, location, text, and level of headings within a document may be preserved as metadata.

Extracted text is divided into sub-portions at block 1006. Paragraph and metadata extraction 132 may divide text into sub-portions (referred to herein as paragraphs, chunks, pieces, and/or portions) using different methods depending on the type of file of the content item being divided. For example, for a text file (e.g., document data 129), paragraph and metadata extraction 132 may determine whether the file is formatted or unformatted. A formatted file (e.g., a file including headers, sections, and other formatting) may be broken into sub-portions based on such headings. For example, paragraph and metadata extraction 132 may utilize headings as a guide for breaking up text. For example, sub-portions identified by paragraph and metadata extraction 132 may not span across different sections (e.g., text under headings), such that text in a sub-portion is all text relating to the same heading. Paragraph and metadata extraction 132 may divide unformatted text into sub-portions using fixed size chunks (e.g., a certain number of words or characters may be initially included in a sub-portion). Paragraph and metadata extraction 132 may, in some examples, first include a fixed number of words in a sub-portion, and continue on in the text adding words to the sub-portion until some ending punctuation is reached. Accordingly, sentences may be preserved within sub-portions. In some examples, paragraph and metadata extraction 132 may further utilize page coordinates to process and divide text formatted in multiple columns per page.

For text corresponding to audio or video content, paragraph and metadata extraction 132 may utilize fixed numbers of words and punctuation, similar to the method of breaking up unformatted text. For such text corresponding to audio or video content, paragraph and metadata extraction 132 may further utilize time limit thresholds. For example, a time limit threshold may be used to determine whether to cut off a sub-portion of text (e.g., a sub-portion may not exceed a certain time length). A time limit threshold may be further used to determine whether to include a next sentence in a sub-portion. For example, sentences which are separated by breaks that are significantly longer than the average break between sentences may be automatically placed in different sub-portions, as long pauses in audio or video content are likely associated with a change in concept.

At block 1008, the text of the sub-portions created at block 1006 is processed. In some examples, features may be extracted from each sub-portion of processed text, which features may be used to associate the sub-portions with concepts. Concept association 135 may process the text of the sub-portions differently depending on whether concept association 135 is using a probabilistic approach or a semantic approach to associate sub-portions of text with concepts. Generally, a probabilistic approach may be used or may be more accurate for long documents, while a transformer-based approach may be used with more varying document lengths.

For the probabilistic approach, text for each sub-portion may be processed by removing stopwords and punctuation from the text and converting sentences to words. In some examples, pre-processing may further extract unique words from a sub-portion along with the frequency of such unique words in the sub-portion, which may be used to generate a corpus used by the LDA 134 when identifying concepts using the probabilistic approach. For the transformer-based approach, pre-processing may include removal of punctuation from each sub-portion of text and creation of an embedding for each sub-portion of text. Such embeddings may be created, for example, using the transformer 136.

Concept clusters are identified using the extracted features at block 1010. Concept association 135 may further identify concept clusters differently based on whether the content item is being processed using a probabilistic approach or the transformer-based approach. For the probabilistic approach, the pre-processed sub-portions of text are used to create a corpus utilized by the LDA 134. Concept association 135 may run the LDA 134 for a given number of clusters and evaluate the output of the LDA 134 using a coherence score. Concept association 135 may continue to run the LDA 134 with different numbers of clusters or cluster sizes until the coherence score stabilizes or a maximum cluster size is reached. The LDA 134 may then be regenerated using the cluster size obtained through the iterative process, and the generated LDA 134 may include information regarding topic probabilities per sub-portion and keyword distribution per concept. For the transformer-based approach, concept association 135 may place the embeddings representing the text sub-portions in a high-dimensional semantic space. Concept association 135 may use clustering (e.g., k-means clustering) to cluster the embeddings in the high-dimensional semantic space. Concept association 135 may iterate on the clustering to determine a number of clusters. For example, at each iteration of the clustering in the high-dimensional semantic space, concept association 135 may calculate a silhouette score for the embeddings in the cluster. The number of clusters may be determined by maximizing the silhouette score for the embeddings in the clusters.

At block 1012, the uploaded file is associated with concepts of the identified concept clusters. The uploaded file may be associated with the concepts by first identifying keywords describing the concept clusters and then associating the sub-portions of the text with the identified keywords. Potential keywords may be generated using the text of each of the sub-portions in a cluster. For example, concept association 135 may identify a listing of candidate keywords and keyword filtering 140 may select the most relevant keywords from those candidate keywords to represent a concept. In some examples, title generation 138 may further create a title for each topic in a cluster. In various examples, concept association 135 may identify keywords from a cluster text (e.g., a text including each sub-portion of text in the cluster) by identifying frequently occurring words, calculating similarity scores between an embedding of the cluster text and embeddings of candidate keywords, filtering out nouns, and other techniques described herein. Keyword filtering 140 may select the most relevant keywords utilizing frequency, similarity scores, or other methods described herein.

Once keywords are determined, concept analysis 142 may associate the uploaded file with concepts of the identified concept clusters by determining the most dominant concepts or topics per each page, time interval, or other sub-portion of the content item. For example, each content sub-portion may be associated with the concept represented by the concept cluster the sub-portion was a part of during concept association 135. Such concept associations may be used, for example, to visualize and map what concepts are covered by the content item so that these can be more quickly understood and/or categorized. For example, the content management system 102 may use the generated concept associations to provide content to users within the content management system 102, update or create a knowledge base 125 of the content management system 102, generate user interfaces depicting the concept associations (e.g., user interfaces 300, 400, 500, and 600), and the like. For example, result generation 144 may create generated graphs 146 responsive to user requests to create such graphs. UI generation 124 may display the graphs at user interfaces of user devices accessing the content management system 102, such as user interfaces 126 and 128 of user devices 104 and 106, respectively.

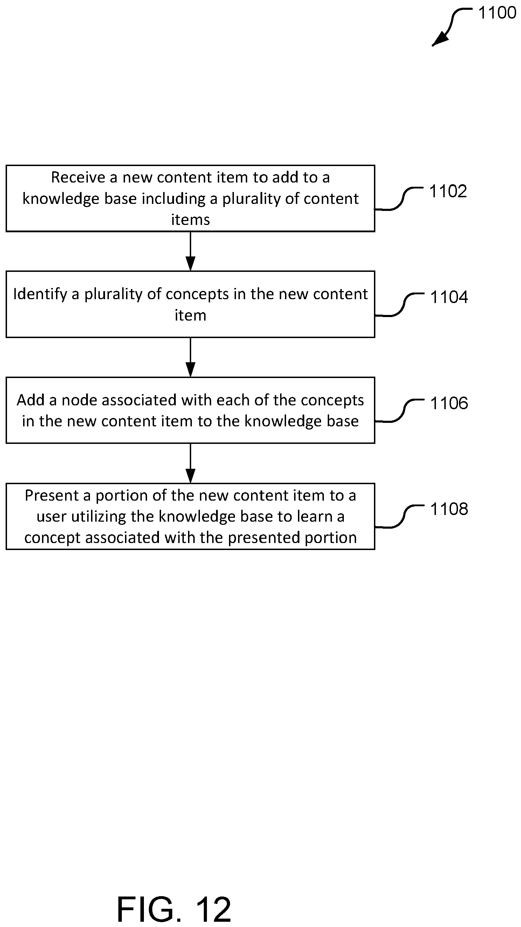

FIG. 12 illustrates an example method 1100 of utilizing tracked concepts within a knowledge base. At block 1102, a new content item is received to add to a knowledge base including a plurality of content items. The new content item may be received through user upload, providing a location of the content item (e.g., a URL), or otherwise using a user interface of the content management system 102 (e.g., user interface 126 or user interface 128 of FIG. 1). In some examples, the new content item may be a content item already existing in a knowledge base, where a user wants to break up the content item or otherwise identify concepts covered by (e.g., described in) the content item. A plurality of concepts in the new content item are identified at block 1104. In various examples, the new concepts may be identified using the method 1000 described with respect to FIG. 11.

At block 1106, a node is added to the knowledge base associated with each of the concepts in the new content item. Concept tracking 118 may create content items corresponding to portions of the uploaded file teaching or covering various concepts. For example, result generation 144 may create such content items. The content items may be provided to the contextualizer 120, which may create nodes in the knowledge base 125 corresponding to the newly created content items and may reconstruct a graph of the knowledge base 125 using the newly created nodes. For example, the contextualizer 120 may place the nodes within a space of the knowledge base 125 based on the concepts included in the content items. In some examples, after placing the nodes within the space of the knowledge base 125, the contextualizer 120 may re-generate content groups of the knowledge base 125 by repeating a clustering algorithm on the graph of the knowledge base 125.

In some examples, identified concepts or sub-portions of text associated with a concept may be used for directed similarity analysis or categorization. For example, text and/or identified concepts may be associated with other categories, descriptions, search terms, labels, groupings, and the like. For example, such categorization may help to categorize text or content as most relevant to a particular job description, role description, job responsibility, or the like. Accordingly, the content may be presented to end users having similar job descriptions. Content may further be categorized to ascertain which parts of a piece of content should be assigned to various skill descriptions, competencies, or marking criteria. Similar directed similarity analysis could be used to, for example, analyze a transcript of a technical support phone call to categorize which product, or part of a product, various portions of the call most closely relate to.

A portion of the new content item is presented to a user utilizing the knowledge base to learn a concept associated with the presented portion at block 1108. As a user moves through the content in the knowledge base 125, the user may be presented with new content items based on their understanding of already presented content, and the concepts presented in such content. For example, a user moving through a knowledge base 125 associated with cybersecurity may be presented with content directed to creating strong passwords. After viewing the content, the user may be presented with free response, multiple choice, or other types of questions to evaluate the user's understanding of the concepts associated with creating strong passwords. Where the evaluation shows that the user has a strong understanding of the concepts, the user may move on to content teaching other concepts related to cybersecurity. Where the evaluation shows that the user does not have a strong understanding of the concepts, or would benefit from additional content, the content management system 102 may present additional content related to creation of strong passwords from the knowledge base 125. If a new content item is added and the concept identified in sub-portions of the content item are identified as concepts a user has not yet mastered, the user may be prompted to review the newly added content nodes or newly created content items in order to strengthen their understanding of the concept.

In some examples, content presented to a user from the knowledge base 125 may include a portion of a larger content item, where the content item has been evaluated by concept tracking 118. In various examples, when the user views or interacts with such content, the user may be directed to a portion of the content covering concepts that the user is actively learning. For example, where the user is learning about phishing attempts, the user may be directed to a portion of an article about cybersecurity discussing different types of phishing attempts (e.g., the relevant portion of the article may be highlighted, displayed within easy view of the user, or otherwise emphasized). Similarly, users may be directed to specific portions of audio or video content relevant to specific concepts. For example, video or audio content may begin playing at a timestamp covering a specific topic or concept. In some examples, the user may navigate to other portions of the content item as desired.

In accordance with the above description, the content tracking described herein may perform segmentation of large pieces of content, including multimedia content, into smaller portions based on concepts presented in such portions. The methods used for the content tracking described herein may deal with multiple types of content, including formatted documents, unformatted text, multimedia files, audio files, video files, and the like in any type of content or asset management environment. Such content tracking may further be used to identify concepts in, and categorize, other types of documents, such as books, correspondence, e-mails, and the like. When used with an adaptive learning model (e.g., using a contextualizer to generate a graph within a knowledge space), such content tracking may provide users with relevant content to enhance learning and help users move through content more efficiently. The content tracking may further improve the granularity of the knowledge space, by identifying more discrete topics within content items. In various examples, the methods used in the content tracking may identify concepts and groupings of concepts that humans would be unlikely to identify. The content tracking described herein also includes title and keyword generation, which creates labels for various concepts that are easily understood, such that the results, graphs, and other outputs are more easily interpreted by end users.

The technology described herein may be implemented as logical operations and/or modules in one or more systems. The logical operations may be implemented as a sequence of processor-implemented steps directed by software programs executing in one or more computer systems and as interconnected machine or circuit modules within one or more computer systems, or as a combination of both. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations may be performed in any order, unless explicitly claimed otherwise or a specific order is inherently necessitated by the claim language.

In some implementations, articles of manufacture are provided as computer program products that cause the instantiation of operations on a computer system to implement the procedural operations. One implementation of a computer program product provides a non-transitory computer program storage medium readable by a computer system and encoding a computer program. It should further be understood that the described technology may be employed in special purpose devices independent of a personal computer.

The above specification, examples and data provide a complete description of the structure and use of exemplary embodiments of the invention as defined in the claims. Although various embodiments of the claimed invention have been described above with a certain degree of particularity, or with reference to one or more individual embodiments, it is appreciated that numerous alterations to the disclosed embodiments without departing from the spirit or scope of the claimed invention may be possible. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

## Claims

1. A method of identifying one or more concepts in a multimedia file, the method comprising:
separating text derived from the multimedia file into sub-portions;
extracting features from the text of the sub-portions;
identifying concept clusters for the sub-portions based on the extracted features, the concept clusters each being associated with two or more sub-portions and a concept of the concepts;
utilizing the identified concept clusters to associate respective sub-portions with one or more concepts of the concepts presented in the sub-portions of text based on the identified concept clusters;
associating, for respective concept clusters, the one or more concepts with one or more keywords based on analysis of text of the two or more sub-portions associated with the respective concept cluster; and
presenting, via a user interface, one or more portions of the multimedia file and one or more concept labels associated with the one or more portions of the multimedia file, the one or more portions of the multimedia file generated based on the one or more concepts presented in each of the sub-portions of text of the multimedia file, the one or more concept labels generated based on the one or more keywords associated with the one or more concepts presented in each of the sub-portions of text;
receiving, via the user interface, an adjustment to a marker corresponding to a starting location or an ending location of a portion of the one or more portions of the multimedia file within the multimedia file; and
presenting, via the user interface, an updated portion of the multimedia file based on the received update to the marker of the portion of the multimedia file.

2. The method of claim 1, further comprising:
visualizing a conceptual composition of the multimedia file with respect to one or more of amounts of concepts and temporal location via the user interface; and
using text of one of the sub-portions for directed similarity analysis or categorization, wherein the directed similarity analysis or categorization is done using machine learning.

3. The method of claim 1, wherein extracting the features from the text of the sub-portions comprises providing the sub-portions of the text derived from the multimedia file to a transformer to create embeddings associated with respective sub-portions of the text derived from the multimedia file, wherein identifying the concept clusters comprises positioning the embeddings in a high-dimensional semantic space and using a clustering algorithm in the high-dimensional semantic space.

4. The method of claim 3, wherein identifying the concept clusters further comprises determining a number of the concept clusters by calculating a silhouette score for the embeddings in the high-dimensional semantic space.

5. The method of claim 1, wherein identifying the concept clusters comprises using a latent Dirichlet allocation (LDA) model.

6. The method of claim 1, wherein presenting the one or more concepts presented in each of the sub-portions of text of the multimedia file comprises presenting the one or more concepts and corresponding location markers of the multimedia file.

7. The method of claim 6, wherein the location markers include one of timestamps, page numbers, and page coordinates.

8. The method of claim 1, wherein the multimedia file includes text and one or more of images and graphics.

9. The method of claim 1, wherein the multimedia file is one of a video or audio file.

10. One or more non-transitory computer readable media encoded with instructions which, when executed by one or more processors, cause the one or more processors to:
receive, via a user interface, a multimedia file to add to a knowledge base;
separate text derived from the multimedia file into a plurality of sub-portions;
identify concept clusters, each concept cluster being associated with two or more sub-portions and a concept of a plurality of concepts;
utilize the identified concept clusters to identify one or more concepts of the plurality of concepts associated with each of the sub-portions of the multimedia file;
associate, for respective concept clusters, the identified one or more concepts with one or more keywords based on analysis of text of the two or more sub-portions associated with the respective concept cluster;
present, via the user interface, one or more graphics displaying the one or more concepts associated with at least one sub-portion of the sub-portions of the multimedia file and the one or more keywords associated with the one or more concepts;
receive, via the user interface, an adjustment to a marker corresponding to a starting location or an ending location of the at least one sub-portion within the multimedia file; and
present, via the user interface, an updated sub-portion of the multimedia file based on the received update to the marker of the at least one sub-portion.

11. The one or more non-transitory computer readable media of claim 11, wherein identifying the one or more concepts associated with each of the sub-portions of the multimedia file comprises using a latent Dirichlet allocation (LDA) model.

12. The one or more non-transitory computer readable media of claim 11, wherein identifying the one or more concepts associated with each of the sub-portions of the multimedia file comprises providing the sub-portions of the text derived from the multimedia file to a transformer to create embeddings associated with respective sub-portions of the text derived from the multimedia file.

13. The one or more non-transitory computer readable media of claim 12, wherein identifying the concept clusters comprises positioning the embeddings in a high-dimensional semantic space and using a clustering algorithm in the high-dimensional semantic space.

14. The one or more non-transitory computer readable media of claim 13, wherein identifying the concept clusters further comprises determining a number of the concept clusters by calculating a silhouette score for the embeddings in the high-dimensional semantic space.

15. The one or more non-transitory computer readable media of claim 11, wherein the one or more graphs further display a frequency of the one or more concepts associated with the at least one sub-portion of the multimedia file.
